# EUROPÄISCHE PATENTSCHRIFT

(11) **EP 0 617 586 B1**
(45) Veröffentlichungstag und Bekanntmachung des Hinweises auf die Patenterteilung: **13.12.1995**
(21) Anmeldenummer: 93901599.6
(22) Anmeldetag: 19.12.1992
(51) Int. Cl.: A47J 27/00

(54) **KUGELÄHNLICH GEWÖLBTE KOCHPFANNE (WOK)**
PART-SPHEROIDAL FRYING PAN (WOK)
POELE CONCAVE EN FORME DE DOME (WOK)

(30) Priorität: 21.12.1991 DE 4142683
(43) Veröffentlichungstag der Anmeldung: 05.10.1994
(73) Patentinhaber: BOHNER, Hubert, D-88339 Bad Waldsee (DE); BOHNER, Brigitte, D-88339 Bad Waldsee (DE)
(72) Erfinder: BOHNER, Hubert, D-88339 Bad Waldsee (DE)
(74) Vertreter: Patentanwälte Eisele, Otten & Roth
(86) Internationale Anmeldenummer: DE9201069
(87) Internationale Veröffentlichungsnummer: WO9312702

(56) Entgegenhaltungen:
- AU-B- 3 248 484
- FR-A- 2 259 571
- GB-A- 1 282 899
- GB-A- 2 186 184
- GB-A- 2 232 064
- US-A- 4 491 235

## Beschreibung

Die Erfindung betrifft eine kugelähnlich gewölbte Kochpfanne, wie in China gebräuchlich (Wok).

Diese Pfannen werden normalerweise am offenen Feuer bzw. einer Gasflamme verwendet. Dabei wird der am tiefsten liegende kleine Bereich am stärksten erhitzt. Die besondere Kunst des Kochs besteht darin, das geschnitzelte Speisegut nach Fleisch und Gemüseanteilen getrennt ständig zu rühren und zu bewegen und dabei das Fleisch in der Mitte zu braten bzw. in der Soße zu kochen, während die Gemüseanteile ringsum an erhöhter Stelle bei geringerer Hitze gegart werden.

Die bekannte Kochpfanne ist jedoch auf Herden mit ebener Heizfläche nicht verwendbar, da sie keinen festen Stand hat. Außerdem ist die Berührungsfläche mit der Herdplatte zu klein, um genügend Wärme zu übertragen.

Aus der US-Patentschrift 4,491,235 ist zwar ein Wok aus Gußmetall bekannt, der an der Unterseite seines Bodens eine flächige Verdickung aufweist. Dadurch ist dieser Wok zwar standfest, aber so schwer, daß er nicht an einem Stiel mit der Hand in typisch chinesischer Weise bedient werden kann. Aufgrund seines Werkstoffs ist der bekannte Wok bei Induktionsherden nicht verwendbar.

Der Erfindung liegt die Aufgabe zugrunde, eine auf ebenflächigen Induktionsherden verwendbare kugelähnlich gewölbte, aus Metallblech gefertigt Kochpfanne vorzuschlagen, die es erlaubt, nach chinesischer Art in der Pfanne zu hantieren und die dort gebräuchlichen Speisen in gewohnter Weise in Ringzonen unterschiedlicher Hitze zuzubereiten.

Diese Aufgabe wird erfindungsgemäß dadurch gelöst, daß an der Unterseite der Kochpfanne in der Nähe des tiefsten Punktes ein Stützmittel aus einem induktiv erwärmbaren Metall fest und gut wärmeleitend mit der Pfannenwand verbunden ist, das die aus einer ebenen Induktionsheizfläche ausstrahlende Energie durch Wärmeleitung auf darüberliegende Bereiche der Kochpfanne überträgt.

Das Stützmittel kann eine den tiefsten Punkt umgebende Ringanordnung sein, die einen entsprechenden Ringbereich der Pfanne erwärmt. Die einzelnen Ringe können einen im wesentlichen flachen Querschnitt haben und mit flanschartigen Randstreifen flächig fest mit der Kochpfanne verbunden, zum Beispiel angeschweißt oder plattiert sein. Die Ringanordnung kann andererseits aber auch aus Ringen mit rohrförmigen Querschnitten unterschiedlicher Dicke bestehen, wobei die Ringe größeren Durchmessers jeweils dicker sind. Auch diese Ringe können durch Hartlöten oder Schweißen gut wärmeleitend mit der Kochpfanne verbunden sein. Es versteht sich, daß die Ringe vorzugsweise konzentrisch angeordnet sind.

Bei Induktionsherden werden in dem magnetisch leitfähigen Boden eines darauf gestellten Kochtopfes Wirbelströme induziert, die zur schnellen und gleichmäßigen Erhitzung dieses ebenen Bodens führen. Infolge entsprechender Bemessung der Frequenz ist die Eindringtiefe klein, d. h. es wird nur eine Schicht erwärmt, die sich in einem kleinen Abstandsbereich über der Aufstellfläche befindet. Das Stützmittel nach der Erfindung ist deshalb so bemessen, daß der tiefste Bereich der kugelähnlich gewölbten Kochpfanne die Aufstellfläche berührt oder nur einen geringen Abstand von ihr hat. Diese tiefste Stelle erfährt die größte Hitze.

Mit dem Ziel, auch die radial an den tiefsten Punkt anschließenden, höherliegenden Bereiche mit Wärme zu versorgen, wird vorgeschlagen, die äußeren Ringe der Ringanordnung entsprechend höher zu machen. Dabei wird davon ausgegangen, daß nur die unteren Ränder der Ringe, die in der induktiven Eindringzone liegen, sich erwärmen und daß diese Wärme durch Wärmeleitung in die darüberliegende Wandung der Kochpfanne übergeleitet wird. Um diese Wärmeleitung zu begünstigen und durch einen gewissen Speichereffekt eine gleichmäßigere Temperaturverteilung zu erreichen, ist es außerdem zweckmäßig, die ringförmigen Räume zwischen den Ringen mit einem Werkstoff auszufüllen, der in einem innigen Wärmekontakt mit den Ringen steht und eine besonders hohe Wärmeleitfähigkeit und/oder Wärmekapazität aufweist. Beispielsweise eignet sich hierfür Aluminium.

Anstelle der Verwendung einer Mehrzahl einzelner Ringe ist es auch möglich, das Stützmittel aus einem Stück zu fertigen, d. h. aus einem Ring, der den Raum zwischen einer ebenen Stellfläche und der Kochpfanne ausfüllt. An seiner der Kochpfanne zugewandten Oberseite kann der Ring zur Gewichtsersparnis konzentrische Ringnuten aufweisen. Diese Ringnuten können ebenfalls mit einem gut wärmeleitfähigen Werkstoff ausgefüllt, vorzugsweise als Verbundmetallkörper gefertigt sein. Auch dieser Ring muß sehr sorgfältig und gut wärmeleitend an der Pfannenwandung befestigt werden.

Ausführungsbeispiele der Erfindung werden nachfolgend anhand der Zeichnung erläutert. Im einzelnen zeigt
- Fig. 1: eine kugelförmige Kochpfanne mit Fußringen, teilsweise im Axialschnitt,
- Fig. 2: eine kugelförmige Kochpfanne anderer Ausführungsform, teilsweise im Axialschnitt, und
- Fig. 3: den Bodenbereich einer kugelförmigen Kochpfanne im Axialschnitt in größerem Maßstab, wobei rechts und links unterschiedliche Querschnittsbeispiele der angebrachten Ringe dargestellt sind.

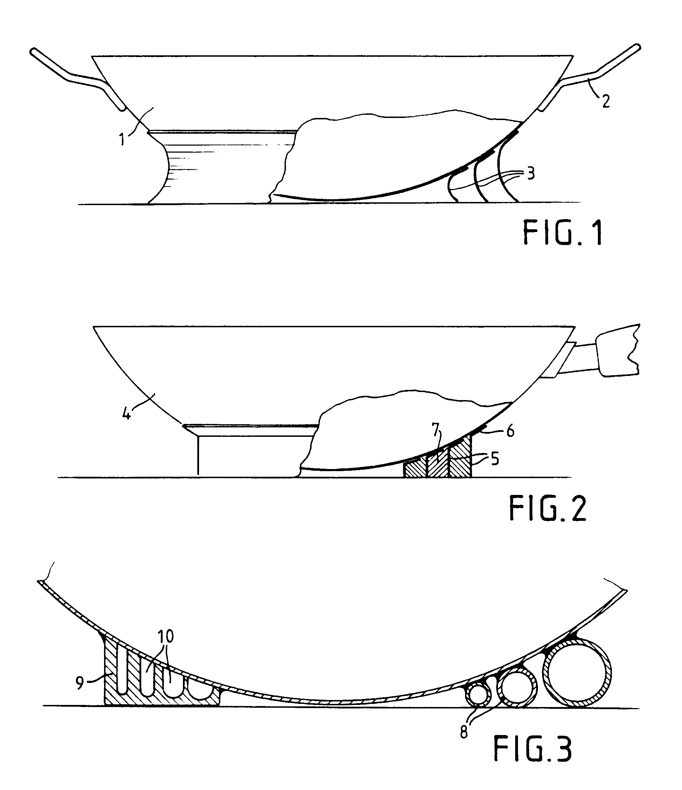

Die in Fig. 1 dargestellte Pfanne 1 hat zwei Griffe 2 und drei konzentrische Fußringe 3, deren bogenförmiger Querschnitt zur Pfannenmitte hin vorgewölbt ist. Der obere Randbereich der Fußringe 3 ist der Wölbung der Pfanne angepaßt und mit dieser verschweißt.

Bei der kugelförmigen Stielpfanne 4 nach Fig. 2 besteht das Stützmittel aus einer Anordnung von vier konzentrischen Ringen 5, deren obere Ränder flanschartig nach außen gebogen und der Wölbung der Pfanne 4 angepaßt sind. Auch diese Randbereiche 6 sind fest und gut wärmeleitend mit der Pfannenwand verbunden. In den drei ringförmigen Zwischenräumen zwischen den Ringen 5 sind Aluminiumfüllungen 7 angebracht und mit den Ringen gut wärmeleitend verbunden. Die unteren Ränder der unterschiedlich hohen Ringe 5 liegen in einer gemeinsamen, zur Aufstellfläche parallelen Ebene. Wie bei dem Ausführungsbeispiel nach Fig. 1, ist die Ringanordnung so bemessen, daß der tiefste Punkt der Pfanne die Aufstellfläche nahezu berührt.

Auch die Kugelpfanne nach Fig. 3 ist für einen ebenen Induktionsherd vorgesehen. Nach dem bevorzugten Ausführungsbeispiel an der rechten Seite der Fig. 3 sind drei Hohlringe 8 vorgesehen, die einen kreisringförmigen Querschnitt haben. Der innerste Ring hat den kleinsten Querschnittsdurchmesser bzw. die kleinste Dicke. Die weiter außen liegenden Ringe haben eine zunehmend größere Dicke, so daß jeder Ring den Abstand zwischen der Aufstellfläche und der Wand der Pfanne genau überbrückt.

An der linken Seite der Fig. 3 ist ein ursprünglich massiver Ring 9 vorgesehen, der etwa die gleiche Breite wie die auf der rechten Seite der Fig. 3 dargestellte Ringanordnung hat. In dem Ring 9 sind von oben vier konzentrische Nuten 10 eingearbeitet. Die weiter außen liegenden Nuten haben eine geringere Breite. Die Nuten 10 können ebenso wie die Zwischenräume der Ringe 8 mit einem gut wärmeleitfähigen Metall ausgefüllt sein.

Da alle gezeigten Ringanordnungen nur im Bereich von wenigen Millimetern über der Aufstellfläche induktiv erwärmt werden, gelangt diese Wärme beim Ring 9 über die einzelnen Stege und bei den Ringen 8 in Umfangsrichtung (bezüglich des Querschnitts) zur Verbindungsstelle mit der Pfannenwand. Die Pfanne wird somit, wie gewünscht, an der tiefsten Stelle infolge unmittelbarer induktiver Erhitzung sehr heiß und in der die tiefste Stelle umgebenden Ringzone Weniger heiß, weil hier nur eine mittelbare Erwärmung eintritt.

Es wird darauf hingewiesen, daß das Stützmittel nach der Erfindung das Gewicht der Kochpfanne nur unwesentlich erhöht, was für die bevorzugte Einhand-Bedienung von größter Wichtigkeit ist.

## Patentansprüche

1. Kugelähnlich gewölbte Kochpfanne (1), die aus Metallblech gefertigt ist, wie in China gebräuchlich (Wok), dadurch gekennzeichnet, daß an der Unterseite der Kochpfanne (1) in der Nähe des tiefsten Punktes ein Stützmittel aus einem induktiv erwärmbaren Metall fest und gut wärmeleitend mit der Pfannenwand verbunden ist, das die aus einer ebenen Induktionsheizfläche ausstrahlende Energie durch Wärmeleitung auf darüberliegende Bereiche der Kochpfanne (1) überträgt.

2. Kochpfanne nach Anspruch 1, dadurch gekennzeichnet, daß das Stützmittel eine den tiefsten Punkt umgebende Ringanordnung ist, die einen entsprechenden Ringbereich der Kochpfanne erwärmt.

3. Kochpfanne nach Anspruch 2, dadurch gekennzeichnet, daß die Ringanordnung Ringe (3; 5) aufweist, die einen im wesentlichen flachen Querschnitt haben und mit flanschartigen Randstreifen (6) flächig fest mit der Kochpfanne (1; 4) verbunden sind.

4. Kochpfanne nach Anspruch 2, dadurch gekennzeichnet, daß die Ringanordnung aus Ringen (8) mit rohrförmigen Querschnitten unterschiedlicher Dicke bestehen, wobei die Ringe größeren Durchmessers jeweils dicker sind.

5. Kochpfanne nach Anspruch 2, dadurch gekennzeichnet, daß die Ringanordnung aus mehreren konzentrisch angeordneten Ringen (3; 5; 8) besteht.

6. Kochpfanne nach Anspruch 1, dadurch gekennzeichnet, daß das Stützmittel ein den Raum zwischen einer ebenen Stellfläche und der Kochpfanne ausfüllender Ring (9) ist, der an seiner der Kochpfanne zugewandten Seite konzentrische Ringnuten (10) aufweist.

7. Kochpfanne nach Anspruch 2, dadurch gekennzeichnet, daß die Räume zwischen den Ringen (5) mit einem erhöht wärmeleitfähigen und/oder wärmespeicherfähigen Füllwerkstoff (7) ausgefüllt sind.

8. Kochpfanne nach Anspruch 7, dadurch gekennzeichnet, daß die Ringe (5) mit dem Füllwerkstoff (7) einen Verbundmetallkörper bilden.

## Claims

1. A part-spheroidal frying pan (1), made of sheet metal, as commonly used in China (wok), characterised in that at the underside of the frying pan (1), in the vicinity of the lowest point, support means made of an inductively heatable metal are rigidly connected to the wall of the frying pan, and serve to transmit energy radiated from a flat, inductively heated hotplate through heat conduction to the part of the frying pan (1) located thereabove.

2. A frying pan according to claim 1, characterised in that the support means is a ring assembly surrounding the lowest point, which heats a corresponding ring part of the frying pan.

3. A frying pan according to claim 2, characterised in that the ring assembly comprises rings (3,5) with a substantially flat cross-section, which are rigidly connected via lateral strips (6) with the wall of the flying pan (1).

4. A flying pan according to claim 2, characterised in that the ring assembly consists of rings (8) with tubular cross-sections of different thickness, the rings with larger diameter being respectively thicker than the areas with smaller diameter.

5. A frying pan according to claim 2, characterised in that the ring assembly consists of a plurality of concentrically arranged rings (3,5,8).

6. A frying pan according to claim 1, characterised in that the support means is a ring (9) filling the space between a flat base area and the wall of the frying pan, the ring 9 having concentric annular grooves (10) on the side facing the wall of the frying pan.

7. A frying pan according to claim 2, characterised in that the spaces between the rings (5) of the ring assembly are filled with a filling material (7) of increased heat conductivity and/or heat storage capacity.

8. A frying pan according to claim 7, characterised in that the rings (5) with the filling material (7) form a composite metal body.

## Revendications

1. Poêle cintrée (1) sensiblement en forme de calotte sphérique, qui est fabriquée en tôle métallique, comme utilisée en Chine (wok),
caractérisée en ce que, sur le dessous de la poêle (1) à proximité du point le plus profond, il est fixé un moyen de support en un métal pouvant être chauffé de façon inductive, relié, en conduisant bien la chaleur, à la paroi de la poêle, moyen qui transmet l'énergie rayonnant d'une surface plane de chauffage par induction, par conduction thermique, aux zones sus-jacentes de la poêle (1).

2. Poêle selon la revendication 1,
caractérisée en ce que le moyen de support est un agencement annulaire entourant le point le plus profond, qui réchauffe une zone annulaire correspondante de la poêle.

3. Poêle selon la revendication 2,
caractérisée en ce que l'agencement annulaire présente des bagues (3;5), qui présentent une section transversale généralement plane et sont solidaires de la poêle (1;4) par des bandes marginales (6) du type bride planes.

4. Poêle selon la revendication 2,
caractérisée en ce que l'agencement annulaire est constitué de bagues (8) ayant des sections transversales tubulaires d'épaisseurs différentes, les bagues de plus grand diamètre étant à chaque fois plus épaisses.

5. Poêle selon la revendication 2,
caractérisée en ce que l'agencement annulaire est constitué de plusieurs bagues (3;5;8) agencées de façon concentrique.

6. Poêle selon la revendication 1,
caractérisée en ce que le moyen de support est une bague (9) remplissant l'espace entre une surface de base plane et la poêle, qui présente, sur sa face en regard de la poêle, des gorges annulaires concentriques (10).

7. Poêle selon la revendication 2,
caractérisée en ce que les espaces entre les bagues (5) sont remplis d'une matière (7) susceptible de conserver la chaleur et/ou d'augmenter la conductivité thermique.

8. Poêle selon la revendication 7,
caractérisée en ce que les bagues (5) forment, avec la matière de remplissage (7), un corps métallique composite.
